# EUROPEAN PATENT APPLICATION

(11) **EP 2 489 641 A1**
(43) Date of publication of application: **22.08.2012**
(21) Application number: 12155374.7
(22) Date of filing: 14.02.2012
(51) Int. Cl.: C02F 1/52, C02F 1/66

(54) **Methods and apparatus for struvite recovery using upstream CO2 injection**

(30) Priority: 15.02.2011 US 201161443186 P
(71) Applicant: Ostara Nutrient Recovery Technologies Inc., Vancouver, British Columbia V6E 2R1 (CA)
(72) Inventor: Baur, Robert James, Lake Oswego, OR Oregon 97035 (US)
(74) Representative: Isarpatent

(57) **Abstract**

Formation of scale in a wastewater treatment system upstream of a struvite precipitation reactor is inhibited by injection of CO₂. The injection may be performed at multiple locations. Injection may be controlled based on one or more of pH, fluid flow and fluid pressure. Injected CO₂ may be stripped at the precipitation reactor to enhance struvite production. Scale may be inhibited while maintaining production of precipitated struvite.

## Description

### Technical Field

The invention relates to wastewater treatment for precipitating dissolved materials from wastewater. For example, the invention may be applied in struvite precipitation reactor systems. Embodiments relate to methods and apparatus for inhibiting struvite formation and scaling problems upstream of a precipitation reactor while allowing and/or enhancing the recovery of struvite or other phosphorus-containing compounds in the precipitation reactor.

### Background

Reactors in general and fluidized bed reactors in particular have been used to remove and recover from wastewater that contains significant concentrations of nutrients (i.e. ammonia and phosphorus), often in the form of phosphate. Such wastewater may come from a wide range of sources. These include sources such as leaching from landfill sites, runoff from agricultural land, effluent from industrial processes, municipal wastewater, animal wastes, and the like. Such wastewater, if released into the environment without treatment, can result in excess effluent phosphorus levels.

Various phosphorus removal and recovery technologies exist. Some of the technologies provide fluidized bed reactors for removing phosphorus from aqueous solutions by producing struvite (MgNH₄PO₄ 6H₂O) or struvite analog or a phosphate compound in the form of pellets. Struvite can be formed by the reaction:

Mg²⁺ + NH₄⁺ + PO₄³⁻ +6H₂O ↔ MgNH₄PO₄·6H₂O

Examples of reactors used to remove and recover phosphorus from wastewater solutions have been described in various references. They include:
- Regy et al., Phosphate recovery by struvite precipitation in a stirred reactor, LAGEP (March to December 2001) includes a survey of various attempts to remove phosphorus and nitrogen from wastewater by struvite precipitation.
- Trentelman, U.S. Patent No. 4,3 9,317 and Piekema et al., Phosphate Recovery by the Crystallization Process: Experience and Developments, paper presented at the 2nd International Conference on Phosphate Recovery for Recycling from Sewage and Animal Wastes, Noordwijkerhout, the Netherlands, March 12-13, 2001, disclose a reactor and method for precipitating phosphate in the form of calcium phosphate, magnesium phosphate, magnesium ammonium phosphate or potassium magnesium phosphate.
- Ueno et al., Three years experience on operating and selling recovered struvite from full scale plant (2001), Environmental Technology, v. 22, p. 1373, discloses the use of sidestream crystallization reactors to remove phosphate in the form of magnesium ammonium phosphate (also known as struvite).
- Tsunekawa et al., Patent Abstracts of Japan No. 11-267665 discloses a reactor for removing phosphorus from water.
- Koch et al., *fluidized bed wastewater treatment*, US Patent No. 7,622,047.

One problem with wastewater treatment systems and reactors is that struvite or scale having other compositions may form undesirably in effluent piping systems. It is known to use certain inhibitors like polyphosphates, phosphonates, polymers, or other compounds or mixtures to help to limit or stop struvite formation in pipes but these inhibitors also inhibit the desired struvite formation downstream in the reactor. A cost effective solution is needed to address this problem.

### Brief Description of the Drawings

The accompanying drawings illustrate non-limiting embodiments of the invention.

Figure 1 is a schematic diagram of a wastewater treatment system according to one example embodiment of the invention.

Figure 2 is a diagram of the fluidized bed reactor portion of a wastewater treatment system according to one example embodiment of the invention.

Figure 3 is a flow chart which illustrates a general method of treating wastewater in a wastewater treatment system according to another example embodiment of the invention.

### Description

Throughout the following description, specific details are set forth in order to provide a more thorough understanding of the invention. However, the invention may be practiced without these particulars. In other instances, well-known elements have not been shown or described in detail to avoid unnecessarily obscuring the invention. Accordingly, the specification and drawings are to be regarded in an illustrative, rather than a restrictive, sense.

Some embodiments of the invention in the following description relate to reactor apparatus or methods wherein phosphorus in wastewater is precipitated in the form of struvite or struvite analogs or a phosphate compound. This choice of example coincides with an aspect of the invention having significant commercial utility. The scope of the invention, however, is not limited to these examples.

An embodiment finds particular application in wastewater treatment systems comprising a fluidized bed reactor of the type described in Koch et al., US Patent No. 7,622,047, entitled "Fluidized Bed Wastewater Treatment", which is hereby incorporated by reference. Such systems may produce pellets of struvite, struvite analogs or other phosphorus-containing solids from wastewater.

For convenience, the term "wastewater" is used in the following description and claims to describe aqueous solutions such as industrial and municipal wastewater, leachate, runoff, animal wastes, effluent or the like. The term "wastewater" is not limited to effluent from municipal sewage, animal waste, or any other specific source. Some embodiments provide methods for treating municipal sewage and/or animal waste. Some embodiments provide methods and apparatus for treating other kinds of wastewater. Indeed, the term "wastewater" should also be considered to include any solution having certain properties and constituents of wastewater (i.e. any wastewater-like solution) which could optionally be manufactured from raw materials strictly for use in the production of struvite.

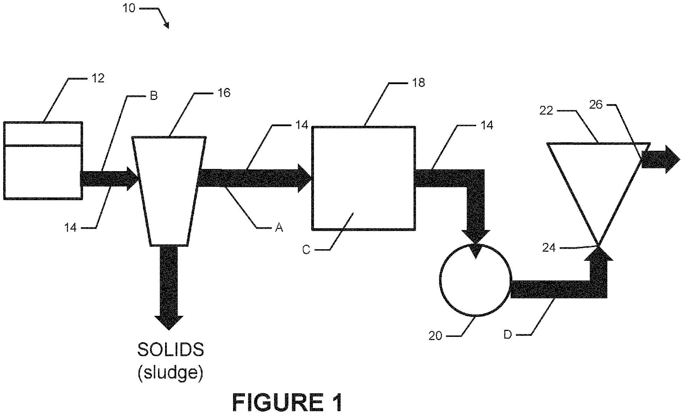

Just by way of example, a typical wastewater treatment system 10 (Figure 1) may comprise a number of elements connected by a piping system 14. Wastewater may begin the treatment process in a digester 12, undergoing aerobic or anaerobic digestion. Digested wastewater may then be pumped to a solids separation device 16 such as a centrifuge or other solids separation device by way of which solids (sludge) may be removed. Examples of solid/liquid separation devices that may be used are centrifuges, clarifiers, thickeners, gravity belt thickeners, belt presses and the like. From solid/liquid separation device 16 effluent may pass to a further tank 18, which may be termed a clarifying/settling tank or equalization/storage tank, from which the effluent may be transferred to precipitation reactor tank 22 through inlet 24. In most cases, between these various elements the wastewater is pumped by means of one or more pumps 20 and passes through various valves, pipe fittings, and instruments.

Struvite or other phosphorus-containing compounds may be precipitated in reactor tank 22 in a variety of ways including through the process described in Koch et al., US Patent No. 7,622,047. Fully treated effluent is removed from reactor tank 22 at outlet 26.

In systems for treating wastewater containing dissolved materials that tend to precipitate at higher pH levels, scale formation in effluent piping can be a problem. An example is a system for recovery of phosphate in the form of struvite from liquid effluents of anaerobic processes (e.g., anaerobic digester liquors, dewatering liquors at municipal wastewater treatment plants, etc.). In such systems, struvite formation may be encouraged as a result of pH increases which can occur when carbon dioxide is released from the wastewater.

Carbon dioxide tends to be released when wastewater cascades down drains or flows in partially-full drain pipes in the effluent piping system. Carbon dioxide is typically present at elevated levels in entering wastewater due to the high fraction of carbon dioxide in the sealed atmosphere in anaerobic treatment tanks that may precede the phosphorus recovery process in a wastewater treatment plant. Once the wastewater is exposed to ambient air, and especially when mixed turbulently with air, or when the fluid pressure is reduced (e.g. in pump suction piping or near piping flow restrictions etc.), the carbon dioxide tends to offgas, causing pH increase in the wastewater. The solubility of struvite is a function of pH and decreases when pH increases. As pH increases, struvite precipitates from the wastewater. The carbon dioxide offgassing and the resultant pH increase can therefore lead to increased struvite scale formation in the effluent piping system upstream from a reactor.

This scale formation is not necessarily a wide-spread phenomenon, as turbulent fluid flow in pipes can cause small localized variations in pH sufficient to trigger struvite precipitation and/or scale formation, for example, at the location of a valve, elbow or other feature that causes the local turbulence or local pressure drop. Struvite scale then can build up at such a location.

In struvite/phosphate recovery systems pH can be controlled to promote the formation of struvite in a reactor and to reduce effluent phosphate levels. One preferred range of pH is between 7.0 and 8.5. The carbon dioxide that can be present at elevated levels in the wastewater results in low pH conditions that are unfavorable to the formation of struvite in the reaction tank. In order to counter this problem, one can add alkaline (basic) substances such as sodium hydroxide (NaOH), magnesium hydroxide (Mg(OH)₂), ammonium hydroxide (NH₄OH), anhydrous ammonia (NH₃), or the like to the system in or upstream from the reaction tank to increase the pH of the wastewater and to promote struvite formation in the reaction tank. However, purchasing such materials and supplying and maintaining equipment to introduce such materials into the process adds to the cost of operating a wastewater treatment system.

One aspect of the invention provides methods and systems which add carbon dioxide to the system, preferably by way of injection of CO₂ in any of the elements of the treatment system upstream of the reactor, including into the piping system 14. An excess of CO₂ inhibits struvite formation and it has been determined that struvite precipitation in a water treatment system can be largely delayed until the effluent reaches the reactor if enough CO₂ is maintained throughout the system. At the reactor, the CO₂ may be stripped from the effluent to enhance the desired struvite precipitation in the reactor. One means of stripping the CO₂ from the effluent is by passing the wastewater through a stripper column or by aerating (scrubbing) it with a scrubbing gas bubbled through the solution in the reactor or a portion thereof. In fact, it is relatively easy to scrub CO₂ from the solution in a precipitation reactor, so relatively large amounts of CO₂ may be injected into the system to inhibit precipitation upstream from the reactor, without affecting the ability to obtain large pellets of struvite from the reactor.

It will be appreciated that CO₂ could be injected into the water treatment process at any point in the process upstream of the reactor 22, for example at stage "A" as shown in Figure 1 where the effluent is pumped from the solid/liquid separation device 16 (e.g. a centrifuge) to the clarifying/settling or equalization/storage tank 18. However, CO₂ injection will assist in inhibiting struvite precipitation only downstream from the point at which CO₂ is injected, so preferably CO₂ is injected early on in the treatment process to prevent scaling throughout the treatment process. Most preferably, CO₂ is injected at multiple stages (for example, at each of stages "A", "B", "C" and "D") throughout the process and system as might be necessary to replace upstream which has off-gassed. CO₂ may also be injected at or near locations where it is known or likely that there is or will be a scale build-up due to local turbulent conditions (for example CO₂ may be injected upstream from and near a valve, elbow or other component that is prone to scaling which would otherwise tend to be subjected to scaling as a result of struvite precipitation).

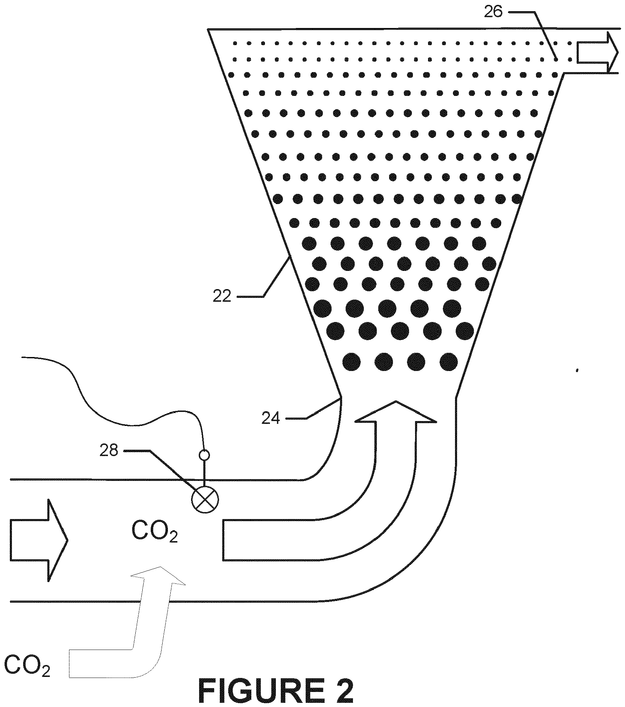

It will be appreciated that one can easily measure the CO₂ concentration or partial pressure and/or the pH of the effluent at one or more points in the system and can use this information to control the rate of flow of any injected CO₂. One such suitable point is at or near the inlet 24 of reactor 22, as shown in Figure 2 (see pH probe 28.) A metering mechanism (e.g. a programmable process controller) may then be employed to control flow of CO₂ into the system in response to readings from probe 28. The system does not necessarily need to measure pH. The rate of injection of CO₂ may be controlled based on fluid pressures and/or flow rates in addition to or instead of pH. In some embodiments the system is controlled by measuring the flow volume in pipe (flow proportional control). The metering mechanism may be connected to receive signal inputs from one or more pH probes and/or one or more pressure sensors and/or one or more flow meters, for example. The metering mechanism may be connected to control valves pumps or other metering devices to add CO₂ at each of one or more locations in the system in response to the signal inputs.

Scale formation can, for example, be detected by measuring pressure in the piping system, and the dose of CO₂ may be adjusted in response to measured pressure signals. For example, fouling in a pump would result in lower discharge pressure for the same pump speed, or fouling in a piping system would result in a higher pump discharge pressure for the same flow.

Table 1 shows data from a test conducted to determine the efficiency of passing a flow of CO₂ into a treatment system:

**TABLE 1**

| **Date** | **Time** | **Centrate Flow GPM** | **Gas Flow CFH** | **Centrate Tank Eff pH** | **Centrate + CO₂ pH** |
|---|---|---|---|---|---|
| 15/12/2010 | 900 | 52 | 30 | 7.53 | 7.4 |
| 16/12/2010 | 1400 | 52 | 30 | 7.42 | 7.29 |
| 17/12/2010 | 1540 | 54 | 30 | 7.4 | 7.28 |
| 18/12/2010 | | | | | |
| 19/12/2010 | | | | | |
| 20/12/2010 | 1030 | 53 | 30 | 7.38 | 7.25 |
| 21/12/2010 | 1045 | 54 | 30 | 7.4 | 7.25 |
| 22/12/2010 | 1615 | 87 | 30 | 7.46 | 7.35 |
| 23/12/2010 | 1440 | 87 | 30 | 7.42 | 7.33 |
| 24/12/2010 | 1505 | 86 | 30 | 7.36 | 7.27 |
| 25/12/2010 | | | | | |
| 26/12/2010 | | | | | |
| 27/12/2010 | 1050 | 75 | 30 | 7.35 | 7.25 |
| 28/12/2010 | 1415 | 52 | 30 | 7.5 | 7.38 |
| 29/12/2010 | 1530 | 78 | 30 | 7.41 | 7.32 |
| 30/12/2010 | 1500 | 78 | 30 | 7.45 | 7.36 |
| 31/12/2010 | 1545 | 52 | 30 | 7.35 | 7.24 |
| 01/01/2011 | | | | | |
| 02/01/2011 | | | | | |
| 03/01/2011 | | | | | |
| 04/01/2011 | 1310 | 75 | 30 | 7.37 | 7.29 |
| 05/01/2011 | 1410 | 55 | 30 | 7.38 | 7.28 |
| 06/01/2011 | 1600 | 76 | 30 | 7.35 | 7.28 |
| 07/01/2011 | | | | | |
| 08/01/2011 | | | | | |
| 09/01/2011 | 1430 | 78 | 30 | 7.35 | 7.24 |
| 10/01/2011 | 1510 | 69 | 30 | 7.38 | 7.25 |
| 11/01/2011 | 1510 | 71 | 30 | 7.39 | 7.3 |
| 12/01/2011 | | | | | |
| 13/01/2011 | 1445 | 70 | 30 | 7.4 | 7.3 |
| 14/01/2011 | 1400 | 73 | 30 | 7.44 | 7.33 |
| 15/01/2011 | | | | | |
| 16/01/2011 | | | | | |
| 17/01/2011 | 1535 | 74 | 30 | 7.41 | 7.32 |
| 18/01/2011 | 1240 | 73 | 20 | 7.39 | 7.33 |
| 19/01/2011 | 1245 | 72 | 20 | 7.45 | 7.39 |
| 20/01/2011 | 1240 | 73 | 20 | 7.43 | 7.37 |
| 21/01/2011 | | | | | |
| 22/01/2011 | | | | | |
| 23/01/2011 | | | | | |
| 24/01/2011 | 1350 | 73 | 20 | 7.5 | 7.42 |
| 25/01/2011 | | | | | |
| 26/01/2011 | | | | | |
| 27/01/2011 | | | | | |
| 28/01/2011 | | | | | |
| 29/01/2011 | | | | | |
| 30/01/2001 | | | | | |
| 31/01/2011 | | | | | |

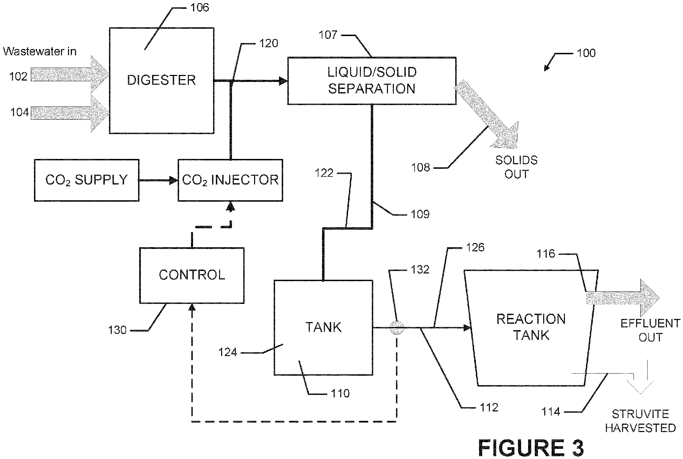

Figure 3 depicts apparatus and illustrates a method 100 according to an example embodiment of the invention. Method 100 takes fresh wastewater 102 or recycled wastewater 104 (optional) and subjects the wastewater to digestion 106 in a digester. Digested wastewater then travels to a centrifuge or other solid/liquid separation device where liquids and solids are separated 107, for example by centrifugation. Solids may be removed 108 from the wastewater at this stage. Wastewater is then fed 109 to a clarifying/settling or equalization/storage tank where it is allowed to settle or kept mixed 110. The wastewater is thereafter pumped 112 to a reaction tank from which struvite may be harvested 114. Treated effluent then exits 116 the reaction tank.

At one or more stages of the process, CO₂ is injected into the system, for example at one or more of steps 120, 122, 124 and 126. A control device 130 may continuously control the flow of CO₂ to accomplish a desired level of carbon dioxide in response to signals received from one or more probes 132.

One problem with wastewater treatment systems used to produce struvite is that there can be a large percentage of loss of struvite in the form of 'fines' - small struvite crystals that form but are so small that they are carried off with effluent from the reactor. The present technology hopes to reduce upstream scale formation without creating a situation where too many fines form. At the reactor pH may change in a graduated manner and it is thought that this is thought to be good for reducing formation of fines.

As will be apparent to those skilled in the art in the light of the foregoing disclosure, many alterations and modifications are possible in the practice of this invention without departing from the spirit or scope thereof.

## Claims

1. A wastewater treatment system for producing struvite or another phosphorus-containing solid from a wastewater solution, the system comprising in combination at least two of a digester, a solid/liquid separation device, a settling tank and a reaction tank, and a piping system, wherein CO₂ is injected into the wastewater in one or more of the digester, solid/liquid separation device, settling tank, reaction tank and piping system.

2. A wastewater treatment system according to claim 1, further comprising a probe for measuring the CO₂ concentration or partial pressure and/or the pH of the wastewater, the probe configured to send signals to a control system for controlling CO₂ injection responsive to signals received from the probe.

3. A wastewater treatment system according to claim 1 wherein the CO₂ is injected upstream of the reaction tank.

4. A wastewater treatment system according to any one of claims 1 to 3 wherein the CO₂ is injected at more than one location in the system upstream of the reaction tank.

5. A wastewater treatment system according to any one of claims 1 to 4, wherein the system is configured to maintain the wastewater pH between 7.0 and 8.5.

6. A wastewater treatment system according to any one of claims 1 to 5 comprising an injector for injecting CO₂ upstream from a component prone to scale formation.

7. A method for treating wastewater to produce struvite or another phosphorus-containing solid, the method comprising:
a. introducing wastewater into a wastewater treatment system; and
b. injecting CO₂ into the wastewater at one or more points in the wastewater treatment system upstream of a precipitation reactor in an amount to prevent or limit formation of struvite upstream of the reactor.

8. A method for treating wastewater according to claim 7 further comprising the step of controlling the flow of CO₂ into the wastewater in response to one or more signals received from one or more probes, to maintain a predetermined level of CO₂ in the wastewater, the predetermined level of CO₂ sufficient to substantially inhibit the formation of struvite in the treatment system upstream of the reactor of the system.

9. A method according to claim 7 or 8, the method comprising, in the treatment system:
a. digesting the wastewater in a digester;
b. from the digester, transferring the wastewater to a solid/liquid separation device;
c. from the centrifuge removing solids and from the solid/liquid separation device transferring the wastewater to a tank;
d. from the tank transferring the wastewater to the precipitation reactor for the formation of struvite; and
e. removing effluent from the precipitation reactor;
and further comprising injecting CO₂ into the wastewater during one or more of: the step of introducing the wastewater into a wastewater treatment system and the steps a-d, in an amount sufficient to limit struvite formation.

10. A method according to claim 9 comprising maintaining the pH of the wastewater between 7.0 and 8.5.

11. A method according to claim 9 further comprising removing the CO₂ from solution in the precipitation reactor by air stripping.

12. A method according to any one of claims 7 to 11 comprising injecting CO₂ into the treatment system immediately upstream from a component prone to scale formation.
